# EUROPEAN PATENT APPLICATION

(11) **EP 3 410 378 A1**
(43) Date of publication of application: **05.12.2018**
(21) Application number: 18174529.0
(22) Date of filing: 28.05.2018
(51) Int. Cl.: G06Q 30/00

(54) **PROVISION AND MANAGEMENT OF ADVERTISING VIA MOBILE ENTITY**

(30) Priority: 29.05.2017 JP 2017105618
(71) Applicant: Renesas Electronics Corporation, Tokyo 135-0061 (JP)
(72) Inventor: Hirama, Takayuki, Koutou-ku, Tokyo, Tokyo 135-0061 (JP)
(74) Representative: Glawe, Delfs, Moll

(57) **Abstract**

Provided is a technique for managing advertising displayed on digital signage. An advertising management server (120) causes a mobile display medium (130) having an electronic signboard (131) to display one or more advertisements (140), acquires positional information about the mobile display medium (130), receives, from a mobile communication terminal (150) having a photograph function, a photograph image of the advertisement (140) displayed on the mobile display medium (130) and positional information about a position where the photograph image was taken, and grants predetermined payment data for visual recognition of the advertisement (140) by a user of the mobile communication terminal (150), to a manager of the mobile display medium (130) and the user of the mobile communication terminal (150), when the visual recognition of the advertisement (140) by the user of the mobile communication terminal (150) is confirmed based on the positional information about the mobile display medium (130) and positional information about the mobile communication terminal (150).

## Description

This nonprovisional application is based on Japanese Patent Application No. 2017-105618 filed on May 29, 2017 with the Japan Patent Office, the entire contents of which are hereby incorporated by reference.

### BACKGROUND OF THE INVENTION

### Field of the Invention

The present disclosure relates to management of advertising, and more specifically relates to management of advertisements displayed on a mobile entity.

### Description of the Background Art

Regarding advertising, Japanese Patent Laying-Open No. 2001-343249 for example discloses a technique for "allowing a driver to choose a shop easily and charging an advertising fee to an advertiser rationally". The technique is disclosed specifically as follows. "A system including: vehicle-mounted terminals mounted in respective vehicles, the vehicle-mounted terminals each having identity information and including position detection means for detecting the position of the vehicle; and an advertising information supply terminal communicatively connected to each of the vehicle-mounted terminals and including a database in which advertising information is stored. The advertising information supply terminal receives, from the vehicle-mounted terminal, the identity information and the vehicle position information indicating the position of the vehicle, extracts, from the database, the advertising information based on the vehicle position information and shop position information indicating the position of a shop to be advertised, and transmits the extracted advertising information to the vehicle-mounted terminal specified by the identity information. The vehicle-mounted terminal further includes means for displaying advertising information, and means for transmitting, to the advertising information supply terminal, arrival information indicting arrival at the advertised shop. The advertising information supply terminal further includes means for charging an advertising fee to an advertiser for the shop, in response to the received arrival information".

According to the technique disclosed in Patent Document 1, "there can be provided an advertising fee charging method of charging, to an advertiser, an advertising fee determined based on effects produced by the advertising information" and "it is easy for the advertiser to recognize the effects produced by the advertising information".

According to the technique disclosed in Patent Document 1, however, the target of advertising is limited to vehicles' users, and therefore, the effects of advertising on walkers for example cannot be recognized and the effects of advertising are thus restrictive. An attempt to enhance advertising effects may result in increase of the advertising fee. Accordingly, a technique for minimizing increase of the advertising fee is required. A technique for enhancing advertising effects is also required.

### SUMMARY OF THE INVENTION

According to an embodiment, a program executed by a computer for managing advertising is provided. The program causes the computer to:
cause at least one mobile display medium having a communication function to display one or more advertisements;
acquire positional information about the at least one mobile display medium;
receive, from a mobile communication terminal having a photograph function, a photograph image of the advertisement displayed on the at least one mobile display medium, and positional information about a position where the photograph image was taken; and
grant predetermined payment data for visual recognition of the advertisement by a user of the mobile communication terminal, to a manager of the at least one mobile display medium and the user of the mobile communication terminal, when confirming the visual recognition of the advertisement by the user of the mobile communication terminal, based on the positional information about the at least one mobile display medium and the positional information from the mobile communication terminal.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a schematic configuration of a system 10.
Fig. 2 shows an example of screens for a user's SNS account according to an aspect.
Fig. 3 is a block diagram showing a hardware configuration of a computer 300 according to an aspect.
Fig. 4 is a block diagram showing a hardware configuration of a terminal 400.
Fig. 5 shows transition of a screen displayed on a monitor 35 of a mobile communication terminal 150.
Fig. 6 conceptually shows a manner of storing data on a hard disk 5 of computer 300.
Fig. 7 is a flowchart showing a part of a process performed by an advertising management server 120, a mobile display medium 130 and a mobile communication terminal 150.
Fig. 8 shows operations of advertising management server 120, mobile display medium 130, and mobile communication terminal 150 included in system 10.
Fig. 9 shows a state in which a user 151 visually recognizes respective advertisements provided by an advertiser 110 on a plurality of vehicles.
Fig. 10 shows a state in which respective advertisements displayed on a plurality of mobile display media 130 are visually recognized by a plurality of mobile communication terminals 150.

### DESCRIPTION OF THE PREFERRED EMBODIMENTS

Embodiments of the present invention are hereinafter described with reference to the drawings. In the following description, the same components are denoted by the same reference characters and named identically, and function identically. A detailed description thereof is therefore not repeated.

### [System Configuration]

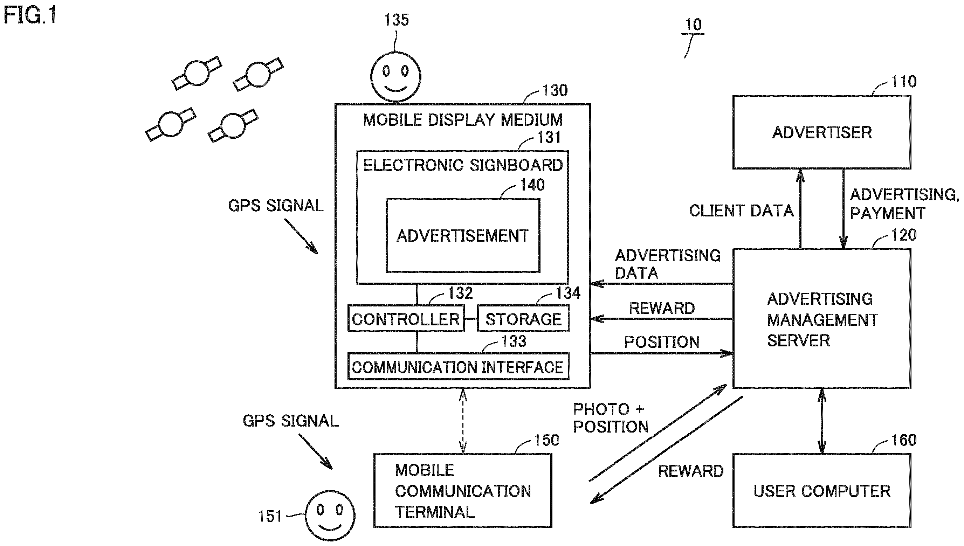

Referring to Fig. 1, a configuration of a system 10 according to an embodiment is described. Fig. 1 shows a schematic configuration of system 10. System 10 includes an advertiser 110, an advertising management server 120, a mobile display medium 130, a mobile communication terminal 150, and a user computer 160. Mobile display medium 130 includes an electronic signboard 131, a controller 132, a communication interface 133, and a storage 134.

Advertiser 110 may be any of restaurant, store, café, and other retailers, beauty salon, aesthetic salon, automobile repair shop, and other service business entities. The business category of the advertiser is not limited to them.

Advertising management server 120 is administered by a business entity that provides advertising. Based on a request from advertiser 110, the business entity provides advertising. The business entity may include advertising agency, social networking service provider, and other business entities.

For example, advertiser 110 requests advertising management server 120 to do advertising for the advertiser. At this time, advertiser 110 provides, to advertising management server 120, information to be advertised in the form of advertising data. Alternatively, based on a request from advertiser 110, advertising management server 120 creates advertising data for advertising advertiser 110. Advertising management server 120 delivers the advertising data to mobile display medium 130.

Mobile display medium 130 is implemented in the form of any of bicycle, motorbike, passenger car, microbus, route bus, train, metro, aircraft, watercraft, and other moving vehicles. Mobile display medium 130 is managed by an owner or manager 135 of the moving vehicle. Manager 135 may either be a transport business entity providing transportation via moving vehicles, or a general user.

Electronic signboard 131 is also called digital signage, and implemented for example in the form of any of liquid crystal monitor, organic EL monitor, and other electronic display media. Electronic signboard 131 may display an advertisement 140 using data supplied to mobile display medium 130. Communication of data is implemented by a communication function of mobile display medium 130, or by writing of data in storage 134. In an aspect, manager 135 provides mobile display medium 130 as a location where advertisement 140 is to be displayed based on a request from advertiser 110.

Controller 132 controls display of advertisement 140 on electronic signboard 131. For example, controller 132 communicates with advertising management server 120 via communication interface 133 to receive advertising data for displaying advertisement 140. Controller 132 uses the advertising data to cause advertisement 140 to be displayed on electronic signboard 131. In another aspect, controller 132 uses display time data received from advertising management server 120 to control the display time of advertisement 140. In still another aspect, controller 132 can cause electronic signboard 131 to display, in addition to advertisement 140 based on the advertising data, identity information about mobile display medium 130 or identity information about advertisement 140. When a plurality of advertisements 140 are displayed on a plurality of mobile display media 130, this configuration enables advertising management server 120 to easily confirm which mobile display medium displays a certain advertisement 140 that was visually recognized by mobile communication terminal 150.

Storage 134 stores data for displaying advertisement 140, identity information about mobile display medium 130, positional information about mobile display medium 130, and a traveling history, for example. Storage 134 is implemented in the form of any of hard disk, SSD, and other nonvolatile storage devices. In another aspect, storage 134 may be implemented in the form of removable data recording medium.

Communication interface 133 communicates with advertising management server 120, mobile communication terminal 150, and any information communication device other than these. In an aspect, controller 132, communication interface 133, and storage 134 may be implemented by a processor, a communication device, and a storage device that are included in a mobile communication terminal such as smartphone.

Mobile display medium 130 acquires positional information at predetermined time intervals while traveling. The positional information is acquired from respective GPS signals received from at least four GPS satellites. The positional information also includes the time of day. In another aspect, a signal transmitted from a transmitter installed at a predetermined place for giving informing about the position of this place may be received by mobile display medium 130, and the received signal may be used as the positional information. The acquired positional information is transmitted, to advertising management server 120, together with the identity information about mobile display medium 130.

In another aspect, when mobile display medium 130 arrives at a predetermined place, mobile display medium 130 acquires the arrival time and the positional information, and transmits the acquired data to advertising management server 120. The predetermined place may for example be bus stop, road intersection, car parking area, bicycle parking area, shopping mall, station, airport, or the like.

For example, if mobile display medium 130 is a route bus, mobile display medium 130 stops at bus stops and some intersections. At this time, some walkers and other users visually recognize mobile display medium 130. When advertisement 140 is displayed on the body of mobile display medium 130, users may visually recognize advertisement 140. Many users own mobile communication terminals 150. Mobile communication terminal 150 may for example be any of smartphone, tablet terminal, and other portable information communication terminals. Further, most of mobile communication terminals 150 have a camera and a positional information acquisition function. A user attracted by advertisement 140 takes a photograph of advertisement 140 by means of mobile communication terminal 150. At this time, mobile communication terminal 150 uses respective GPS signals received from four or more GPS satellites to acquire positional information about mobile communication terminal 150.

A user 151 who uses mobile communication terminal 150 may for example use any of Facebook®, LINE®, and other SNSs. In an aspect, if the user has its account in the SNS, user 151 may access the account from mobile communication terminal 150 to upload the photograph of advertisement 140. If the SNS is administered by advertising management server 120 or the SNS cooperates with advertising management server 120, user 151 uploads the photograph to the user's account. At this time, positional information about mobile communication terminal 150 is also transmitted together with the photograph to advertising management server 120.

Advertising management server 120 receives, from mobile communication terminal 150, photograph image data of advertisement 140 as well as positional information and identity information about mobile communication terminal 150. Advertising management server 120 stores, in a storage device, the received data and a timestamp indicating the date and time of receipt. Advertising management server 120 identifies the transmitter of the photograph and the positional information, based on the identity information. Advertising management server 120 uses the place where and the time when the photograph was taken as search keys to retrieve the positional information about the place from the positional information transmitted from mobile display medium 130. Confirming that mobile display medium 130 was present at the place where mobile communication terminal 150 took the photograph of advertisement 140, at the time when the photograph was taken, advertising management server 120 determines that advertisement 140 was actually recognized visually by user 151 of mobile communication terminal 150. As advertisement 140 is visually recognized, advertising management server 120 pays a predetermined reward to each of mobile display medium 130 and mobile communication terminal 150. Advertising management server 120 transmits to advertiser 110 information about user 151 who visually recognized advertisement 140. Further, advertising management server 120 calculates a fee based on the number of times advertisement 140 was actually visually recognized by user, and informs advertiser 110 of the fee. In such a manner, the advertising fee is calculated based on the past record. The initial cost can be reduced to provide an advertising service at reduced cost even for advertiser 110 reluctant to bear the initial cost.

User computer 160 receives data from advertising management server 120. Based on respective images and positional information uploaded by a plurality of users, computer 160 may analyze big data.

### [Example of Screen for SNS Account]

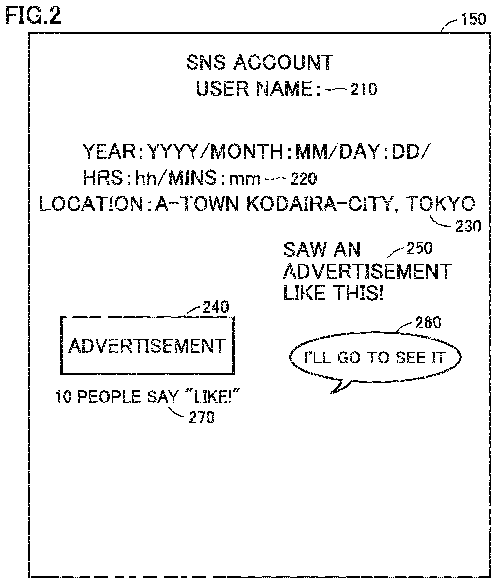

Referring to Fig. 2, a screen displayed on any of mobile communication terminal 150 and other terminals is described. Fig. 2 shows an example of screens for an SNS account of a user according to an aspect. The screen is displayed for example when a user taking a photograph of advertisement 140 accesses the SNS account after uploading the photograph to advertising management server 120.

The screen displayed on mobile communication terminal 150 includes a user name 210, photograph date and time 220, photograph location 230, a photograph image 240, a comment 250 of a user, a comment 260 of a user associated with the former user, and a comment 270 of an SNS administrator. This screen may not only be displayed on mobile communication terminal 150, but also be displayed on a tablet terminal, a personal computer, or any information processor other than these.

### [Hardware Configuration of Computer]

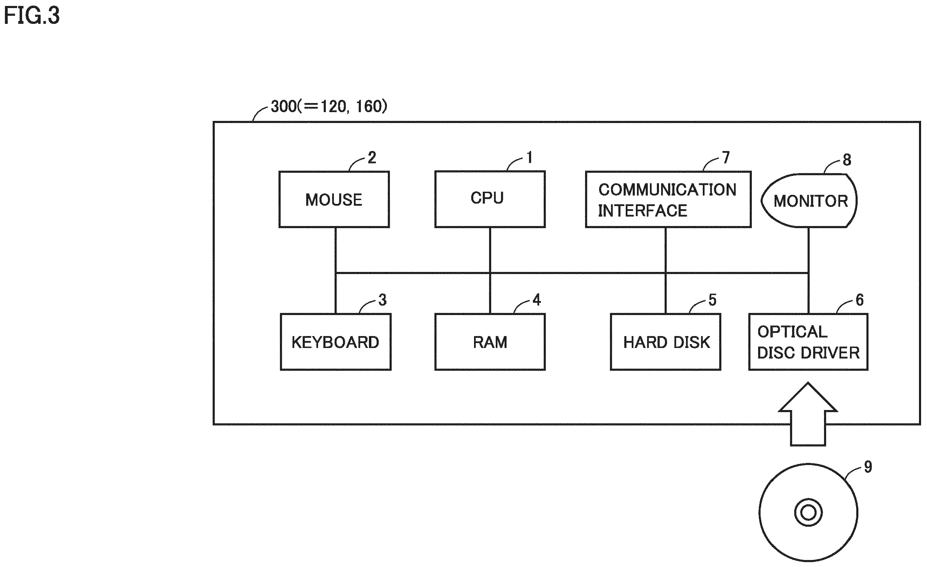

Referring to Fig. 3, a hardware configuration of advertising management server 120 and user computer 160 is described. Advertising management server 120 and user computer 160 are each implemented by computer 300 having a well-known configuration. Fig. 3 is a block diagram showing a hardware configuration of computer 300 according to an aspect.

Computer 300 includes, as its main components, a CPU 1 to execute a program, a mouse 2 and a keyboard 3 to receive input of instructions from a user of computer 300, a RAM 4 to store, in a volatile manner, data that is generated through execution of a program by CPU 1 or data that is input via mouse 2 or keyboard 3, a hard disk 5 to store data in a non-volatile manner, an optical disc driver 6, a monitor 8, and a communication interface 7. These components are connected to one another through a bus. A CD-ROM 9 or any optical disc is placed in optical disc driver 6. Communication interface 7 may include USB interface, wired LAN interface, wireless LAN interface, Bluetooth® interface, and the like. Communication interface 7 is not limited to them.

Processing by computer 300 is implemented by software executed by each hardware device and CPU 1. Such software may be stored in advance on hard disk 5. Alternatively, the software may be stored on any computer-readable nonvolatile data recording medium such as CD-ROM 9 and distributed in the form of a program product. Alternatively, the software may be provided as a program product that can be downloaded by an information provider connected to a network such as the Internet. Such software is read from a data recording medium by a data reader such as optical disc driver 6, or downloaded via communication interface 7 and thereafter stored on hard disk 5 temporarily. The software is read from hard disk 5 by CPU 1 and stored, in the form of an executable program, on RAM 4. CPU 1 executes this program.

The components constituting computer 300 shown in Fig. 3 are common components. The most essential element in the present embodiment may therefore be the program stored in computer 300. The operation of each hardware device of computer 300 is well known, and a detailed description thereof is not repeated.

The data recording medium is not limited to CD-ROM, FD, and hard disk. The data recording medium may be magnetic tape, cassette tape, optical disc /MD /DVD), IC card , optical card, or nonvolatile data recording medium statically carrying programs such as semiconductor memory, like mask ROM, EPROM , EEPROM , flash ROM, and the like.

Program herein may include not only programs directly executable by CPU 1, but also compressed program, encrypted program, and the like.

### [Hardware Configuration of Information Communication Terminal]

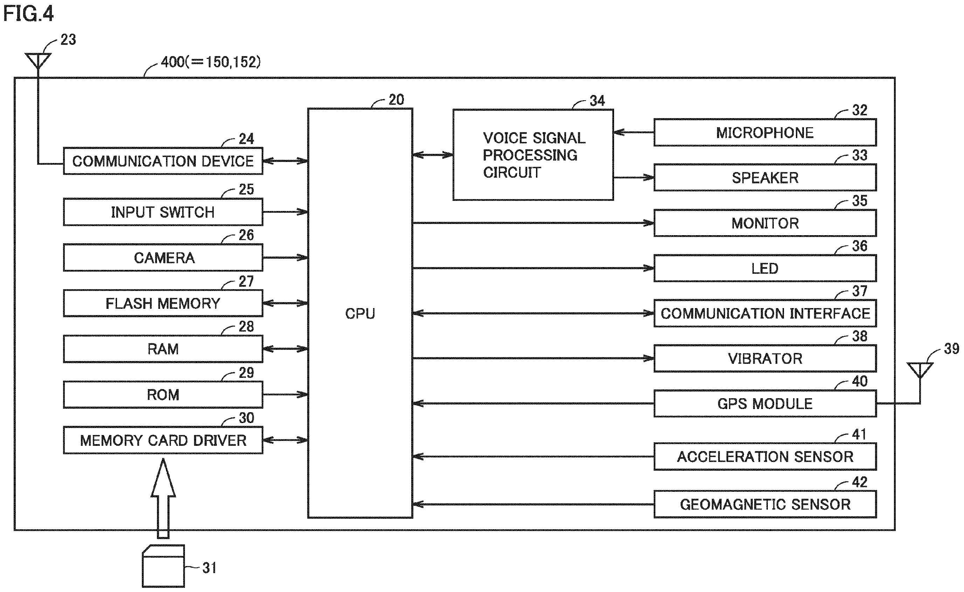

Referring to Fig. 4, a configuration of a terminal 400 implementing mobile communication terminal 150 is described. Fig. 4 is a block diagram showing a hardware configuration of terminal 400. In an aspect, terminal 400 is implemented in the form of mobile phone such as smartphone.

Terminal 400 includes a CPU 20, an antenna 23, a communication device 24, an input switch 25, a camera 26, a flash memory 27, a RAM 28, a ROM 29, a memory card driver 30, a microphone 32, a speaker 33, a voice signal processing circuit 34, a monitor 35, an LED 36, a communication interface 37, a vibrator 38, a GPS antenna 39, a GPS module 40, an acceleration sensor 41, and a geomagnetic sensor 42. A memory card 31 may be placed in memory card driver 30.

Antenna 23 receives a signal emitted from a base station for mobile phones, or emits a signal via a base station for communicating with other communication devices. A signal received by antenna 23 undergoes front-end processing by communication device 24, and the processed signal is sent to CPU 20.

CPU 20 performs processing for controlling operation of terminal 400, based on instructions given to terminal 400. As terminal 400 receives a signal, CPU 20 performs pre-defined processing based on the signal sent from communication device 24, and transmits the processed signal to voice signal processing circuit 34. Voice signal processing circuit 34 performs pre-defined signal processing on the signal, and transmits the processed signal to speaker 33. Speaker 33 outputs voice based on the signal.

Input switch 25 receives input of instructions to terminal 400. Input switch 25 is implemented by touch sensor and/or buttons mounted on a casing of terminal 400. In response to the input instruction, a signal is input to CPU 20.

Microphone 32 receives voice directed toward terminal 400, and transmits a signal corresponding to the voice to voice signal processing circuit 34. Based on the signal, voice signal processing circuit 34 performs pre-defined processing for calling, and transmits the processed signal to CPU 20. CPU 20 converts the signal into data to be transmitted, and transmits the data generated by the conversion to communication device 24. Using the data, communication device 24 generates a signal to be transmitted, and transmits the signal toward antenna 23.

Flash memory 27 stores data in a non-volatile manner. The stored data includes SNS data, image data such as photo data, and positional information, for example. CPU 20 reads data stored in flash memory 27 to perform pre-defined processing using the read data.

RAM 28 temporarily stores data generated by CPU 20 based on operation performed on input switch 25. ROM 29 stores a program or data for causing terminal 400 to perform a predetermined operation. CPU 20 reads the program or data from ROM 29 to control the operation of terminal 400.

Memory card driver 30 reads data stored on memory card 31 and transmits the data to CPU 20. Memory card driver 30 writes data output from CPU 20, in a storage area of memory card 31.

Voice signal processing circuit 34 performs signal processing for calling as described above. In the example shown in Fig. 4, CPU 20 and voice signal processing circuit 34 are illustrated as being configured as separate components. In another aspect, however, CPU 20 and voice signal processing circuit 34 may be configured as a single unit.

Monitor 35 is a touch-type monitor, for example. Monitor 35 may either be liquid crystal monitor or organic EL monitor. Based on data obtained from CPU 20, monitor 35 displays an image defined by the data. For example, monitor 35 displays a still image, a moving image, or a map for example stored in flash memory 27.

LED 36 emits light based on a signal that is output from CPU 20. In an aspect, communication interface 37 is implemented by Wi-Fi®, Bluetooth®, or NFC, for example. In another aspect, communication interface 37 receives a data communication cable attached thereto. Communication interface 37 emits a signal that is output from CPU 20. Alternatively, communication interface 37 transmits to CPU 20 data included in a signal received from outside terminal 400.

Vibrator 38 causes vibration at a predetermined frequency, based on a signal that is output from CPU 20.

GPS antenna 39 receives respective GPS signals that are transmitted from four or more satellites. The received GPS signals are each input to GPS module 40. GPS module 40 measures the position using the GPS signals and the well-known technology to acquire positional information about terminal 400.

Acceleration sensor 41 detects an acceleration acting on terminal 400. In an aspect, acceleration sensor 41 is implemented in the form of a three-axis acceleration sensor. The detected acceleration is input to CPU 20. Based on the acceleration, CPU 20 detects motion and/or posture of terminal 400.

Geomagnetic sensor 42 detects the orientation of terminal 400. The information acquired through this detection is input to CPU 20.

### [Configuration Overview]

Configuration examples based on technical ideas in the present disclosure are now described.

### <Configuration Example 1>

According to an embodiment, a method performed by computer 300 for managing advertisement 140 is provided. According to the method, computer 300 causes at least one mobile display medium 130 having a communication function to display one or more advertisements 140. For example, computer 300 transmits electronic data about advertisement 140 to mobile display medium 130, and mobile display medium 130 uses the electronic data to display advertisement 140 on electronic signboard 131.

Computer 300 acquires positional information about at least one mobile display medium 130. For example, computer 300 receives the positional information from mobile display medium 130. Alternatively, computer 300 acquires the positional information based on a traveling schedule of and time-of-day information about mobile display medium 130.

Computer 300 receives, from mobile communication terminal 150, a photograph image of advertisement 140 displayed on at least one mobile display medium 130, and positional information about a position where the photograph image was taken. The timing when the photograph image is received may either be the same as or different from the timing when the positional information is received.

Based on the positional information about at least one mobile display medium 130 and the positional information from mobile communication terminal 150, computer 300 determines whether advertisement 140 has been visually recognized by a user of mobile communication terminal 150. For example, computer 300 compares the positional information about the position where the photograph image was taken with the positional information about mobile display medium 130, to determine whether or not mobile communication terminal 150 was located in the vicinity of mobile display medium 130. When computer 300 determines that mobile communication terminal 150 was located in the vicinity of mobile display medium 130, computer 300 determines that advertisement 140 was actually visually recognized at that time by the user of mobile communication terminal 150. Based on this determination, computer 300 grants predetermined payment data for the visual recognition of advertisement 140, to a manager of at least one mobile display medium 130 and the user of mobile communication terminal 150. For example, in a database managed by computer 300, the payment data is associated with each of an account of the manager and an account of the user. Computer 300 informs the manager of mobile display medium 130 and user 151 of mobile communication terminal 150 of the fact that the payment data has been granted.

According to the configuration as described above, when it is confirmed that advertisement 140 displayed on mobile display medium 130 was actually visually recognized by others, advertiser 110 is charged with an advertising fee. Accordingly, while visual recognition of advertising via digital signage is confirmed, effective advertising can be achieved. A payment for the advertising is given to the manager of mobile display medium 130 and the user of mobile communication terminal 150. Thus, an advertising fee is generated for actual visual recognition of advertisement 140, and the load on advertiser 110 is reasonable with respect to the advertising effect. Moreover, since the user earns a reward for visual recognition of the advertisement, the user may be motivated to actively find the advertisement.

### <Configuration Example 2>

According to another embodiment, the visual recognition of advertisement 140 by the user of mobile communication terminal 150 includes posting of the photograph image on an account of an SNS for the user of mobile communication terminal 150. For example, when the user uploads the photograph image to the SNS account, computer 300 is informed of the uploading of the photograph image. Computer 300 then determines that advertisement 140 was actually visually recognized by user 151.

### <Configuration Example 3>

According to a further embodiment, the visual recognition of advertisement 140 by the user of mobile communication terminal 150 includes confirming that at least one mobile display medium 130 and mobile communication terminal 150 are located within a predetermined range. According to the configuration as described above, when the photograph image of advertisement 140 is a photograph image obtained from another user, for example, computer 300 determines that such a photograph image is not a photograph image actually taken by the user of mobile communication terminal 150. As a result of this, the photograph image is excluded from those for which payment data is to be granted, and therefore, increase of the advertising fee can be minimized or prevented.

### <Configuration Example 4>

According to a further embodiment, causing at least one mobile display medium 130 to display advertisement 140 includes causing a plurality of mobile display media 130 to display respective advertisements 140. Computer 300 transmits electronic data for displaying advertisement 140 to each of mobile display media 130. Respective advertisements 140 displayed on mobile display media 130 may either be identical to or different from each other, or each advertisement displayed on mobile display medium 130 may form a part of a plurality of advertisements.

Acquiring the positional information about at least one mobile display medium 130 includes receiving the positional information from each of mobile display media 130. Respective timings at which the pieces of positional information are received may either be identical to or different from each other. For example, at predetermined time intervals or at a timing like a nighttime timing at which the environment is good for receiving data, computer 300 may receive data from each of mobile display media 130.

Receiving, from mobile communication terminal 150, the photograph image and the positional information includes receiving the photograph image of advertisement 140 displayed on each of mobile display media 130 and the positional information about a position where the photograph image of the advertisement was taken. Computer 300 receives, for each mobile display medium 130, the photograph image and the positional information. The timing at which they are received is not particularly limited. For example, when the user photographs advertisement 140, when a predetermined time is reached, or when the user instructs transmission, mobile communication terminal 150 transmits the photograph image and the positional information to computer 300. In an aspect, the photograph image and the positional information are transmitted at the same timing. The photograph image and the positional information, however, may be transmitted at separate timings.

The confirming of the visual recognition of advertisement 140 by the user of mobile communication terminal 150 includes confirming that all the advertisements displayed on mobile display media 130 were visually recognized by the user. According to the configuration as described above, visual recognition of a plurality of advertisements 140 can be promoted like the so-called stamp rally, and accordingly the advertising effect can be enhanced.

### <Configuration Example 5>

According to an embodiment, causing a plurality of mobile display media 130 to display respective advertisements 140 includes causing mobile display media 130 to display respective advertisements 140 different from each other. Computer 300 further performs causing a mobile display medium 130 displaying an advertisement 140 visually recognized a smaller number of times by mobile communication terminal 150 to display an advertisement 140 visually recognized a larger number of times by mobile communication terminal 150, based on a result of receiving respective photograph images of advertisements 140 different from each other.

According to the configuration as described above, the displayed advertisement contents on mobile display medium 130 can be changed successively so that advertisement 140 that is visually recognized many times by the user of mobile communication terminal 150 is displayed on a plurality of mobile display media 130. In this way, the advertising effect can be enhanced.

### <Configuration Example 6>

According to an embodiment, causing a plurality of mobile display media 130 to display respective advertisements 140 includes causing mobile display media 130 to display respective advertisements 140 different from each other. Computer 300 further performs changing a display time for which each of different advertisements 140 is displayed, depending on the number of times the photograph image of each of different advertisements 140 was visually recognized by mobile communication terminal 150.

According to the configuration as described above, the display time for which advertisement 140 is displayed on electronic signboard 131 may be determined depending on the number of times advertisement 140 was visually recognized. For example, in the case where the display time is determined in advance depending on the number of times the advertisement is visually recognized per day, controller 132 of mobile display medium 130 increases the display time of an advertisement visually recognized more frequently, based on an instruction from computer 300. Accordingly, the advertising effect can be enhanced.

### <Configuration Example 7>

According to an embodiment, the confirming of the visual recognition of advertisement 140 by the user of mobile communication terminal 150 includes confirming that a difference between a time when the photograph image of advertisement 140 was taken and a time when the photograph image was received falls within a predetermined range. According to this configuration, computer 300 can be prevented from erroneously determining that a photograph image was visually recognized by the user of mobile communication terminal 150, based on an image of an advertisement photographed in the past by another user.

### <Other Configuration Examples>

According to a further embodiment, a program for controlling terminal 400 is provided. When the program is executed, CPU 20 of terminal 400 is caused to perform photographing advertisement 140 displayed on mobile display medium 130, and acquiring positional information about terminal 400 when advertisement 140 was photographed. The interval between the timing when the advertisement was photographed and the timing when the positional information was acquired falls within a predetermined period.

CPU 200 further performs displaying a photograph image of advertisement 140 on an account of an SNS for a user of terminal 400, by transmitting, to advertising management server 120 configured to manage the account of the SNS, the photograph image of advertisement 140, date-and-time information indicating date and time when advertisement 140 was photographed, the positional information, and identity information about the user of terminal 400. For example, when the user presses a send button displayed on mobile communication terminal 150, mobile communication terminal 150 transmits, to computer 300, the photograph image, the date-and-time information, the positional information, and the identity information. When the data is loaded to the SNS account for the user, the photograph image is displayed on the account of the user.

When the photograph image is displayed on the account, computer 300 refers to the positional information about mobile display medium 130 and the positional information about terminal 400 to confirm that the photograph image of advertisement 140 was taken by the user. After this, CPU 20 receives, from advertising management server 120, payment data transmitted from computer 300 in response to the confirmation, namely payment data determined in advance so that the payment data is granted for visual recognition of advertisement 140.

According to this configuration, the user of terminal 400 in which the program is downloaded and installed is further promoted to actively search for and find advertisement 140, which can enhance the advertising effect.

### [Example of Screen Transition]

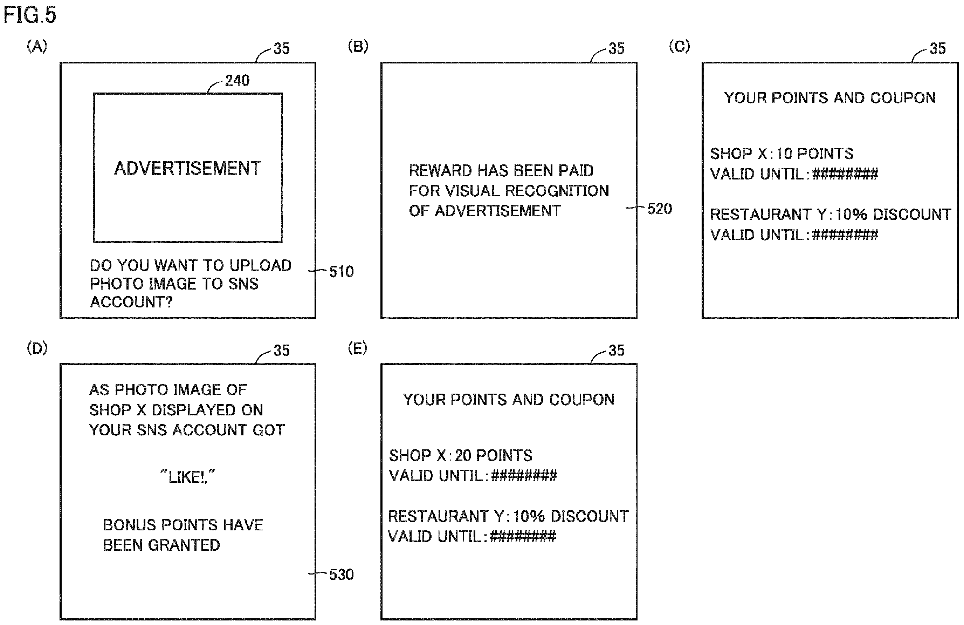

Referring to Fig. 5, transition of a screen displayed on mobile communication terminal 150 is described. Fig. 5 shows transition of a screen displayed on monitor 35 of mobile communication terminal 150. A user visually recognizes advertisement 140, photographs advertisement 140 with mobile communication terminal 150, and executes an application program installed in advance in mobile communication terminal 150. Then, an SNS screen is displayed.

### <Screen A>

For example, monitor 35 displays an image 240 generated by advertisement 140 and a message 510 asking whether to upload the photograph image to an SNS account or not. When a user gives to mobile communication terminal 150 an instruction to upload the image to the SNS account, data for displaying image 240 is transmitted to advertising management server 120.

### <Screen B>

When advertising management server 120 confirms that the image is a photograph of advertisement 140 having been taken actually, a predetermined reward is paid to the user. When the user switches the screen for the SNS account, a message 520 that the reward has been paid is displayed on monitor 35 as shown in screen B for example.

### <Screen C>

In the case where the user has taken photographs of a plurality of retailers, a reward granted by each of the retailer is displayed for each retailer. For example, in response to a user's operation for confirming account information, monitor 35 displays a screen for confirming the rewards granted by retailers such as Shop X and Restaurant Y as shown in Screen C.

### <Screen D>

In another aspect, when the photograph image displayed on the user's SNS account is visually recognized by another user associated with the user, or an operation expressing the user's preference such as "Like!" is given to the photograph image, a message 530 that bonus points are granted is displayed.

### <Screen E>

If a user seeing message 530 performs the same operation as the operation for displaying Screen C, the screen displayed on monitor 35 indicates that points from Shop X have been added as shown in Screen E.

### [Data Structure]

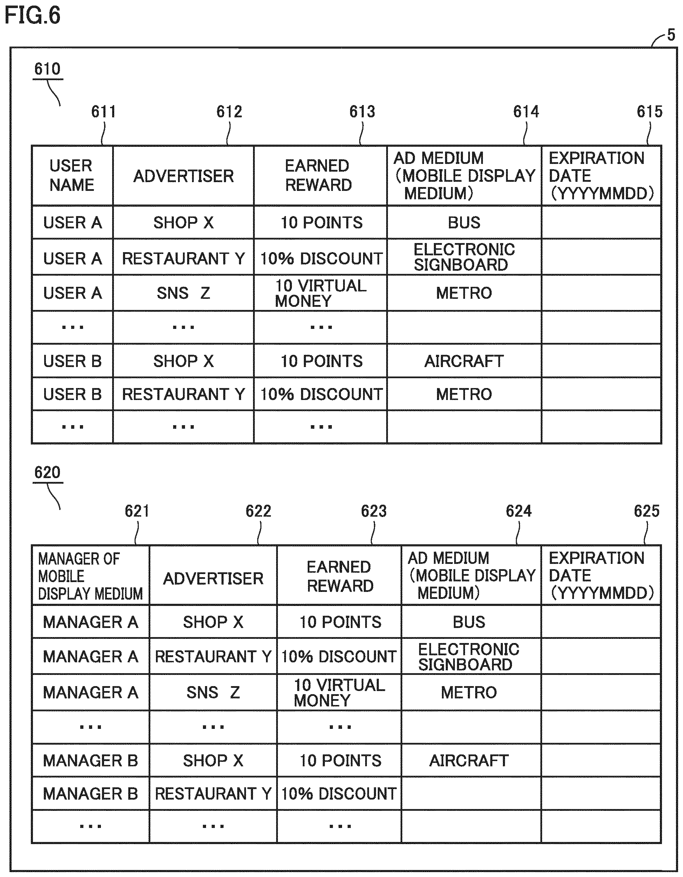

Referring to Fig. 6, a data structure of computer 300 is described. Fig. 6 conceptually shows a manner of storing data on hard disk 5 of computer 300. In an aspect, hard disk 5 holds a table 610 and a table 620.

Table 610 manages data concerning users 151 having visually recognized an advertisement. Table 610 includes user name 611, advertiser 612, earned reward 613, advertising medium 614, and expiration date 615. User name 611 represents user 151 of mobile communication terminal 150. Advertiser 612 represents advertiser 110 wishing to provide advertisement 140 via mobile display medium 130. Earned reward 613 represents a reward that the user has earned. While the earned reward may be points, discount coupon, virtual money, or the like, the earned reward is not limited to them. Advertising medium 614 represents a medium used for presenting advertisements from advertiser 612. Expiration date 615 represents the expiration date of earned reward 613.

Table 620 manages data concerning the manager presenting advertisements. Table 620 includes manager 621, advertiser 622, earned reward 623, advertising medium 624, and expiration date 625. Manager 621 represents manager 135 of medium with which advertisements are displayed. Advertiser 622 represents advertiser 110 wishing to provide advertisement 140 by means of mobile display medium 130. Earned reward 623 represents a reward that the manager has earned. Advertising medium 624 represents a medium used for presenting advertisements from advertiser 622. Expiration date 625 represents the expiration date of earned reward 623.

### [Control Structure]

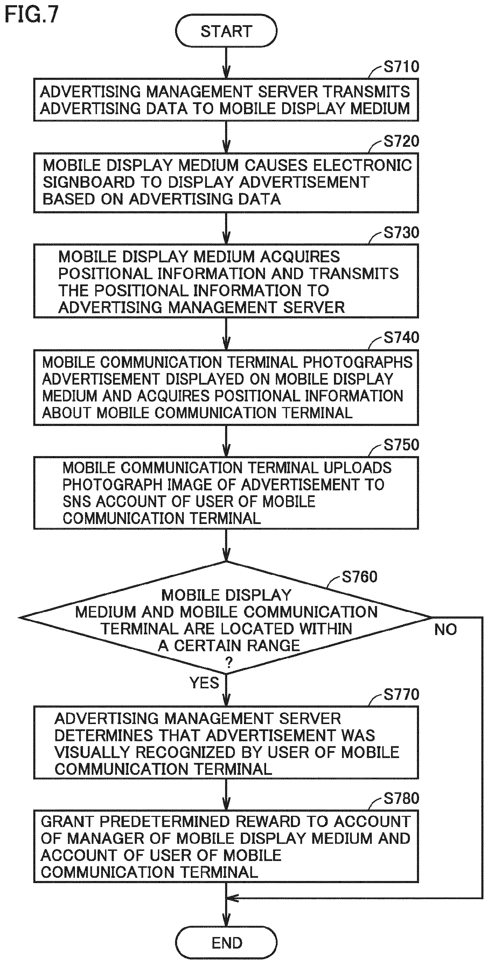

Referring to Fig. 7, a control structure of system 10 is described. Fig. 7 is a flowchart showing a part of a process performed by advertising management server 120, mobile display medium 130 and mobile communication terminal 150.

In step S710, advertising management server 120 transmits advertising data to mobile display medium 130.

In step S720, mobile display medium 130 causes electronic signboard 131 to display advertisement 140 based on the advertising data.

In step S730, mobile display medium 130 acquires positional information, based on an operation of a user of mobile display medium 130, and transmits the positional information to advertising management server 120.

In step S740, mobile communication terminal 150 takes a photograph of advertisement 140 displayed on mobile display medium 130, based on an operation of a user of mobile communication terminal 150, and acquires positional information about mobile communication terminal 150 at the time the photograph is taken.

In step S750, based on an operation of the user of mobile communication terminal 150, mobile communication terminal 150 uploads the photograph image of advertisement 140 to an SNS account for the user of mobile communication terminal 150. The SNS account is managed by an advertising agency that administers advertising management server 120, or by a provider of the SNS service.

In step S760, advertising management server 120 determines whether or not mobile display medium 130 and mobile communication terminal 150 were located within a certain range. When advertising management server 120 determines that mobile display medium 130 and mobile communication terminal 150 were located within the certain range, advertising management server 120 proceeds to step S770. Otherwise, advertising management server 120 ends the process.

In step S770, advertising management server 120 determines that advertisement 140 has been actually visually recognized by the user of mobile communication terminal 150.

In step S780, advertising management server 120 grants a predetermined reward to an account of the manager of mobile display medium 130 and an account of the user of mobile communication terminal 150. The granted reward is for example points, discount coupon, virtual money, or the like. After this, advertising management server 120 informs the manager and the user of the fact that the reward has been granted.

### [Examples of System Operation]

### <Case 1> mobile display medium: mobile communication terminal = 1: 1

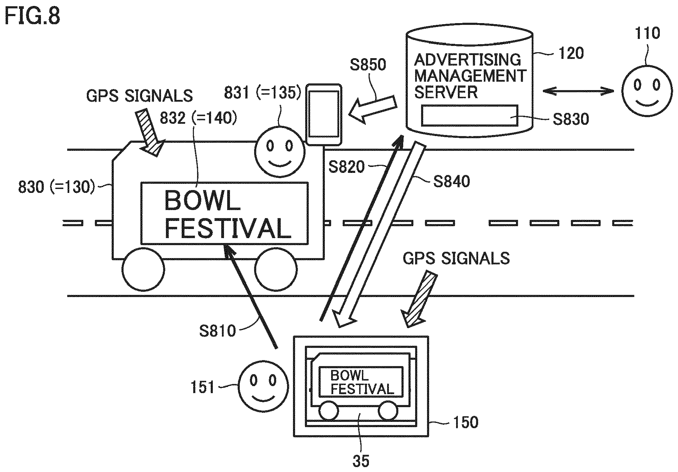

Referring to Figs. 1 and 8, a specific operation example of system 10 according to an aspect is described. System 10 is constituted of advertising management server 120, a vehicle 830 as an example of mobile display medium 130, and mobile communication terminal 150. Fig. 8 shows operations of advertising management server 120, vehicle 830 and mobile communication terminal 150.

As shown in Fig. 1, according to an aspect, advertiser 110 can search for mobile display medium 130 displaying advertisement 140 and user 151 of mobile communication terminal 150 having viewed advertisement 140, through advertising management server 120 providing advertising service and SNS. Both mobile display medium 130 displaying advertisement 140 and mobile communication terminal 150 have a mechanism for providing positional information. Advertising management server 120 uses SNS for confirmation regarding viewing of advertisements.

The manager of mobile display medium 130 such as vehicle-mounted terminal or the like equipped with electronic signboard 131 may select an advertisement to be posted depending on the manager's preference. Mobile display medium 130 has a positioning device such as GPS module, and is capable of detecting positional information by means of the positioning device.

User 151 of mobile communication terminal 150 takes a photograph of advertisement 140 and uploads the photograph image of advertisement 140 to an SNS provider that is for example advertising management server 120. At this time, mobile communication terminal 150 also transmits to the server positional information about mobile communication terminal 150 acquired by a positioning module. The server uses the received data to analyze the photograph image and examine the positional information about the vehicle, and thereby identify mobile display medium 130. When the server confirms that both mobile display medium 130 and user 151 of mobile communication terminal 150 were located within a predetermined range, the server renders a payment to the manager of mobile display medium 130 and user 151 of mobile communication terminal 150.

Referring to Fig. 8, a description is now given of the case where mobile display medium 130 is vehicle 830. Vehicle 830 has a communication function and is connectable to a network such as the Internet. Advertiser 110 requests advertising management server 120 for advertising. Advertising management server 120 transmits advertising data to vehicle 830. Vehicle 830 uses the advertising data to display an advertisement 832 from advertiser 110 on electronic signboard 131 mounted on the exterior of the body of vehicle 830. Electronic signboard 131 is implemented by plasma display, LCD, LED, or vacuum fluorescent display, for example. Vehicle 830 receives GPS signals to acquire positional information about vehicle 830. Vehicle 830 transmits to advertising management server 120 the positional information and identity information about vehicle 830. The positional information is transmitted to advertising management server 120 at predetermined time intervals, based on an instruction from manager 831 of vehicle 830 or based on a request from advertising management server 120, for example. The positional information includes position coordinate values of vehicle 830 and data about date and time when the coordinate values were acquired.

### <Step S810>

Seeing vehicle 830 stopped at an intersection, user 151 visually recognizes advertisement 832. User 151 operates mobile communication terminal 150 to take a photograph of advertisement 832. Then, mobile communication terminal 150 displays the photograph image on monitor 35. Mobile communication terminal 150 can receive four or more GPS signals to acquire its positional information from the received signals.

### <Step S820>

User 151 operates mobile communication terminal 150 to upload the photographed advertisement image to its SNS account. Then, image data and the positional information and identity information about mobile communication terminal 150 are transmitted to advertising management server 120.

### <Step S830>

Based on the date-and-time data included in the positional information received from vehicle 830 and the date-and-time data included in the positional information received from mobile communication terminal 150, advertising management server 120 determines whether or not the image data transmitted from mobile communication terminal 150 was acquired through photographing by means of mobile communication terminal 150. For example, in the case where the image data transmitted from mobile communication terminal 150 was acquired by another information communication terminal at another location at another date-and-time, the positional information or date-and-time information received from mobile display medium 130 do not identical to the positional information or date-and-time information received from mobile communication terminal 150. Then, advertising management server 120 determines that the image data was not acquired in the normal manner by mobile communication terminal 150.

### <Step S840>

Advertising management server 120 pays, to user 151 of mobile communication terminal 150, a reward for the visual recognition of advertisement 832 by user 151 of mobile communication terminal 150. For example, advertising management server 120 associates the SNS account of user 151 with data about points, coupon, virtual money, or the like corresponding to the reward.

### <Step S850>

Advertising management server 120 pays, to manager 831 of vehicle 830, a reward for the visual recognition, by user 151, of advertisement 832 displayed on vehicle 830. For example, advertising management server 120 grants points, coupon, virtual money, or the like corresponding to the reward, to an SNS account of manager 831 or an account for managing advertising.

According to an aspect, the fact that "advertisement 140 displayed on mobile display medium 130 is viewed by user 151 of mobile communication terminal 150 and posted to an SNS by the user" is provided by advertising management server 120. Advertising management server 120 confirms whether or not the advertisement was actually viewed. When the advertisement was viewed, advertising management server 120 pays a reward to mobile display medium 130 and user 151, based on the viewing of the advertisement. Accordingly, the cost for non-viewed advertising can be saved, and advertiser 110 can expect effective advertising.

Although conventional advertising is provided across a broad area, advertising can be provided in a very limited region. Accordingly, local information about a specific location is advertised and the advertising effects can be confirmed through the SNS, which is also useful for expectation of potential needs for products or services provided by advertiser 110.

### <Case 2> mobile display medium: mobile communication terminal = n : 1

As another example, a plurality of mobile display media 130 may be used. In this case, respective mobile display media 130 may display the same advertisements provided by advertiser 110 in an aspect, or may display different advertisements provided by advertiser 110 in another aspect. For example, in the case where vehicle 830 and vehicle 833 cooperate with each other to provide advertising, advertising management server 120 can recognize simultaneous or successive viewing of advertising by user 151 of mobile communication terminal 150. For example, advertising management server 120 may create advertisement 140 like a stamp rally. In this case, advertisement 140 displayed on electronic signboard 131 may include, as a part of electronic signboard 131, identity information about mobile display medium 130, which facilitates identification of mobile display medium 130 displaying advertisement 140 having been visually recognized. Accordingly, advertising management server 120 can easily determine whether or not all the respective advertisements 140 displayed on a plurality of mobile display media 130 have been visually recognized.

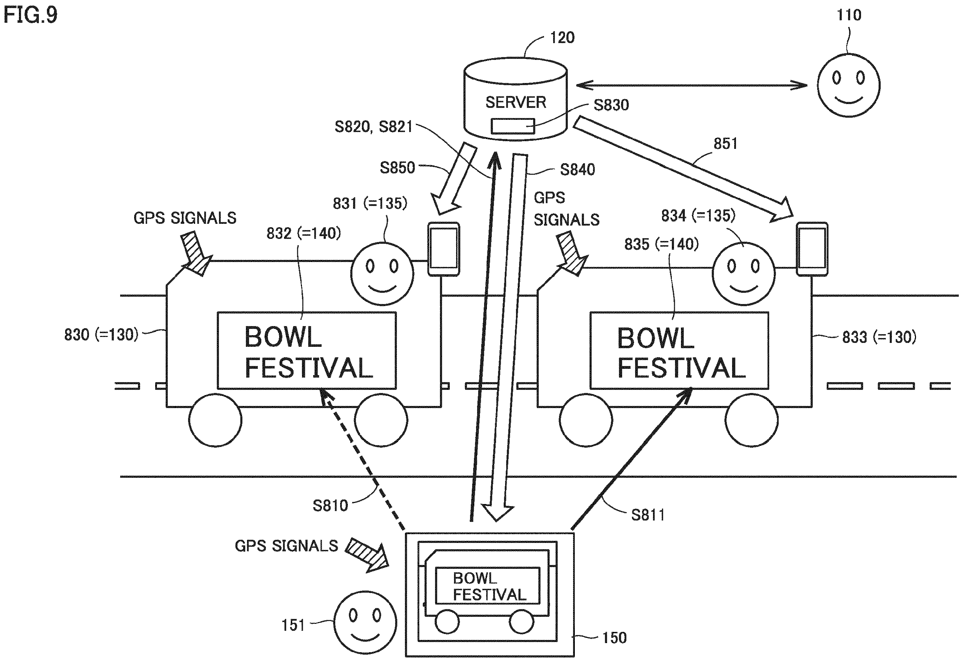

Referring to Fig. 9, another example of the system in the present disclosure is described. Fig. 9 shows a state in which user 151 visually recognizes each of respective advertisements provided by advertiser 110 that are displayed on a plurality of vehicles.

In an aspect, an advertisement provided by a certain advertiser 110 may be displayed on a plurality of mobile display media 130. At this time, user 151 may visually recognize the same advertisements on different mobile display media 130. In such a case, a higher reward may be paid to user 151. For example, the reward may be increased depending on the number of mobile display media 130 that display advertisements identical to each other and having been visually recognized.

By way of example, user 151 may visually recognize vehicle 830 and thereafter visually recognize vehicle 833. Vehicle 830 is managed by manager 831 and vehicle 833 is managed by manager 834. Manager 831 and manager 834 may either be the same or different managers. In this case, user 151 takes a photograph of an advertisement 832 displayed on vehicle 830 with mobile communication terminal 150, and thereafter takes a photograph of an advertisement 835 displayed on vehicle 833 with mobile communication terminal 150. Advertisement 832 and advertisement 835 may either be the same or different advertisements. If these advertisements differ from each other, identity information about each advertisement may be associated with this advertisement. Mobile communication terminal 150 transmits to advertising management server 120 the two images acquired through photographing as well as positional information and identity information. Based on the positional information transmitted from vehicle 830 and vehicle 833 and the positional information transmitted from mobile communication terminal 150, advertising management server 120 determines whether or not the images are those taken through photographing by user 151 of mobile communication terminal 150.

If the images transmitted from mobile communication terminals 150 are images actually acquired through photographing by user 151 of mobile communication terminal 150, advertising management server 120 pays a reward to user 151 as described above. At this time, based on the fact that advertisement 832 has been visually recognized multiple times, advertising management server 120 pays the reward to user 151 depending on the number of times advertisement 832 has been visually recognized. Advertising management server 120 also pays a reward to manager 831 of vehicle 830 for the visual recognition of advertisement 832 and pays a reward to manager 834 of vehicle 833 for the visual recognition of advertisement 835.

According to the configuration as described above, user 151 is motivated to find the same advertisement like the so-called stamp rally, and therefore, the advertising effect can also be enhanced. For example, if advertiser 110 owns a plurality of branch stores or advertiser 110 provides a different variety of products or services, advertising management server 120 can confirm the advertising effect for each product or service, since advertising management server 120 can acquire a large amount of data representing visual recognition of advertisement 140. Accordingly, advertising management server 120 can pay a reward to each of the manager of mobile display medium 130 and user 151, depending on the number of times the advertisement was recognized by user 151 as an advertisement viewer. Accordingly, the possibility that user 151 makes use of a product or service provided by advertiser 110 increases. Moreover, in terms of the ability to attract customers, highly cost-effective advertising can be provided.

### <Case 3> mobile display medium : mobile communication terminal = 1 : m

In another aspect, the history of travel and the history of visual recognition of each mobile display medium 130 and each mobile communication terminal 150 may be managed by advertising management server 120. For example, positional information about mobile display medium 130, advertisement 140 displayed on mobile display medium 130, positional information about mobile communication terminal 150, and the date and time when an image of advertisement 140 was acquired may be collected on advertising management server 120. These pieces of information are organized in time series, and the organized information as a part of big data may be subjected to statistical processing.

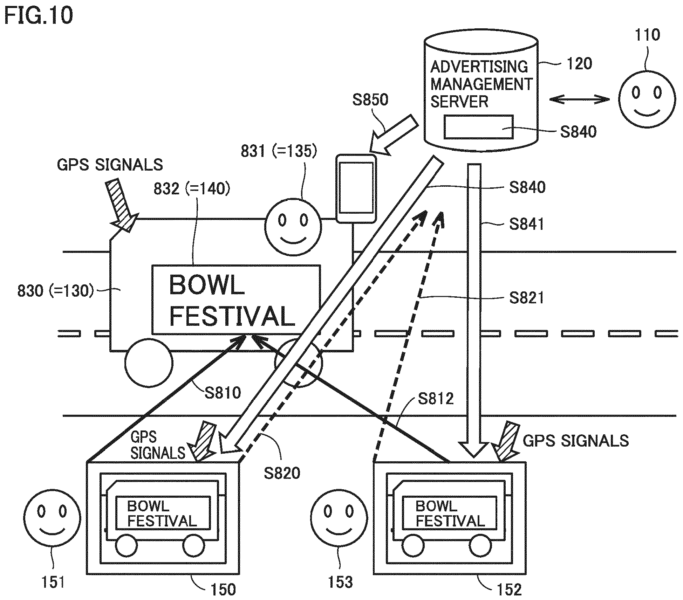

Then, referring to Fig. 10, a further example is described. Fig. 10 shows a state in which an advertisement displayed on mobile display medium 130 is visually recognized by a plurality of mobile communication terminals 150.

In an aspect, advertisement 832 displayed on mobile display medium 130 may be visually recognized by a plurality of users. In this case, the larger the number of users visually recognizing the advertisement, the higher the effect of advertisement 832. Thus, advertising management server 120 may pay a reward to the manager of mobile display medium 130 depending on the number of users visually recognizing advertisement 832.

By way of example, a description is given of the case where each of user 151 of mobile communication terminal 150 and user 153 of mobile communication terminal 152 visually recognizes advertisement 832 displayed on vehicle 830. In this case, user 151 takes a photograph of advertisement 832 and user 153 also takes a photograph of advertisement 832. The place at which user 151 takes a photograph of advertisement 832 may either be the same as or different from the place at which user 153 takes a photograph of advertisement 832. When user 151 takes a photograph of advertisement 832, the image acquired through the photographing is uploaded to advertising management server 120 by mobile communication terminal 150, together with the positional information about mobile communication terminal 150. When user 153 takes a photograph of advertisement 832, the image acquired through the photographing is uploaded to advertising management server 120 by mobile communication terminal 152, together with the positional information about mobile communication terminal 152. As described above, vehicle 830 transmits the positional information about vehicle 830 to advertising management server 120 at a predetermined timing, or when vehicle 830 is located at a predetermined location, or in response to a request from advertising management server 120.

Based on the positional information received from vehicle 830 and the positional information received from each of mobile communication terminal 150 and mobile communication terminal 152, advertising management server 120 determines whether or not each of respective images transmitted by mobile communication terminal 150 and mobile communication terminal 152 is an image acquired in the normal manner through photographing by user 151 or user 153. The determination is made for each of the mobile communication terminals, as in the case shown in Fig. 8. When both the respective images transmitted from these mobile communication terminals are images acquired in the normal manner through photographing by the respective users, advertising management server 120 determines that a high advertising effect is produced by advertisement 832, and increases the reward to be paid to vehicle 830, depending on the number of mobile communication terminals visually recognizing advertisement 832.

According to the configuration as described above, the collected information can be used for research of potential customers. For example, in the case of conventional advertising where coupons for a store for example are granted, the advertising effect can be confirmed only through the actual visit to the store. In contrast, according to the configuration as described above, advertising management server 120 can know the presence of users 151 who have not yet visited the store. Advertising management server 120 can make use of this for planning of the next advertisement that promotes customers' visit to the store. In this way, the advertising effect can also be enhanced gradually.

### <Case 4> mobile display medium : mobile communication terminal = n : m

A plurality of mobile display media 130 may display respective advertisements 140 and each of respective users of a plurality of mobile communication terminals 150 may take a photograph of advertisement 140 and upload the photograph image and positional information to an SNS account. For example, if advertising management server 120 confirms visual recognition of advertisement 140 for each user, this corresponds to the above-described case of mobile display medium : mobile communication terminal = n : 1 . If advertising management server 120 confirms users' visual recognition for each mobile display medium, this corresponds to the above-described case of mobile display medium : mobile communication terminal = 1 : m. As such, when a plurality of mobile display media 130 display respective advertisements 140 and each of the advertisements is visually recognized by a plurality of mobile communication terminals 150, Case 2 and Case 3 can be combined to grant an appropriate reward depending on the state of visual recognition of each advertisement. Depending on whether or not user 151 has visually recognized each advertisement and whether or not user 151 has actually visited the store after visual recognition, an advertising activity appropriate for the user can be promoted.

In this way, according to an embodiment, advertisement 140 is implemented on mobile display medium 130 through digital signage, and a photograph image of advertisement 140 is uploaded to an SNS by a user who has visually recognized advertisement 140. Based on the location of mobile display medium 130 displaying advertisement 140 and the location at which the photograph image of advertisement 140 was acquired, it is confirmed whether or not advertisement 140 has been actually visually recognized. Accordingly, the effect of advertisement 140 can be enhanced. Moreover, uploading, by the user, of the photogram image to the SNS account of the user enables confirmation of actual visual recognition of advertisement 140. Therefore, the history of visual recognition of advertisement 140 can also contribute to advertising for each user.

If mobile display medium 130 is implemented as a route bus, for example, the range across which advertising is distributed is limited to the route of the route bus. Therefore, in contrast to national-version advertising targeted at an indefinite number of anonymous users, advertising restricted to a local area can be implemented. Accordingly, increase of the advertising cost can be minimized or prevented.

The technical ideas in the present disclosure are applicable for example to digital signage mounted on a mobile entity such as vehicle, digital signage installed at a specific location, SNS, and systems functioning as information communication terminals and equipped with at least a monitor and a positional information acquisition function, such as smartphone, personal computer, car navigation system, smart watch, tablet terminal and the like.

Although the present invention has been described and illustrated in detail, it is clearly understood that the same is by way of illustration and example only and is not to be taken by way of limitation, the scope of the present invention being interpreted by the terms of the appended claims.

Many modifications and variations will be apparent to the practitioner skilled in the art. The modifications and variations include any relevant combination of the disclosed features.

## Claims

1. A computer-implemented method for managing advertising, the method comprising:
causing at least one mobile display medium having a communication function to display one or more advertisements(S720);
acquiring positional information about the at least one mobile display medium (S730);
receiving, from a mobile communication terminal having a photograph function, a photograph image of the advertisement displayed on the at least one mobile display medium, and positional information about a position where the photograph image was taken (S740); and
confirming the visual recognition of the advertisement by the user of the mobile communication terminal, based on the positional information about the at least one mobile display medium and the positional information from the mobile communication terminal (S780).

2. The method according to claim 1, further including
granting predetermined payment data for visual recognition of the advertisement by a user of the mobile communication terminal, to a manager of the at least one mobile display medium and the user of the mobile communication terminal, when the visual recognition of the advertisement by the user of the mobile communication terminal is made.

3. The method according to claim 1 or 2, wherein
the visual recognition of the advertisement by the user of the mobile communication terminal includes posting of the photograph image on an account of a social networking service for the user of the mobile communication terminal.

4. The method according to claim 1, 2 or 3, wherein
the visual recognition of the advertisement by the user of the mobile communication terminal includes confirming that the at least one mobile display medium and the mobile communication terminal are located within a predetermined range.

5. The method according to any of claims 1 to 4, wherein
the causing of the at least one mobile display medium to display the one or more advertisements includes causing a plurality of mobile display media to display respective advertisements,
the acquiring of the positional information about the at least one mobile display medium includes receiving the positional information from each of the mobile display media,
the receiving, from the mobile communication terminal, of the photograph image and the positional information includes receiving the photograph image of the advertisement displayed on each of the mobile display media and the positional information about a position where the photograph image of the advertisement was taken, and
the confirming of the visual recognition of the advertisement by the user of the mobile communication terminal includes confirming that all the advertisements displayed on the mobile display media were visually recognized by the user.

6. The method according to claim 5, wherein
the causing of the plurality of mobile display media to display respective advertisements includes causing the mobile display media to display respective advertisements different from each other, and
the method further comprises causing a mobile display medium displaying an advertisement visually recognized a smaller number of times by the mobile communication terminal to display an advertisement visually recognized a larger number of times by the mobile communication terminal, based on a result of receiving respective photograph images of the advertisements different from each other.

7. The method according to claim 5, wherein
the causing of the plurality of mobile display media to display respective advertisements includes causing the mobile display media to display respective advertisements different from each other, and
the method further comprises changing a display time for which each of the different advertisements is displayed, depending on the number of times the photograph image of each of the different advertisements was visually recognized by the mobile communication terminal.

8. The method according to any of claims 1 to 7, wherein
the confirming of the visual recognition of the advertisement by the user of the mobile communication terminal includes confirming that a difference between a time when the photograph image of the advertisement was taken and a time when the photograph image was received falls within a predetermined range.

9. A non-transitory computer-readable data recording medium having instructions stored on the medium for managing advertising, the instructions causing a computer to:
cause at least one mobile display medium having a communication function to display one or more advertisements (S720);
acquire positional information about the at least one mobile display medium (S730);
receive, from a mobile communication terminal having a photograph function, a photograph image of the advertisement displayed on the at least one mobile display medium, and positional information about a position where the photograph image was taken (S740); and
confirm the visual recognition of the advertisement by the user of the mobile communication terminal, based on the positional information about the at least one mobile display medium and the positional information from the mobile communication terminal (S780).

10. The non-transitory computer-readable data recording medium according to claim 9, the instructions further causing the computer to:
grant predetermined payment data for visual recognition of the advertisement by a user of the mobile communication terminal, to a manager of the at least one mobile display medium and the user of the mobile communication terminal, when the visual recognition of the advertisement by the user of the mobile communication terminal is made.

11. The non-transitory computer-readable data recording medium according to claim 9 or 10, wherein
the visual recognition of the advertisement by the user of the mobile communication terminal includes posting of the photograph image on an account of a social networking service for the user of the mobile communication terminal.

12. The non-transitory computer-readable data recording medium according to claim 9 or 10, wherein
the visual recognition of the advertisement by the user of the mobile communication terminal includes confirming that the at least one mobile display medium and the mobile communication terminal are located within a predetermined range.

13. The non-transitory computer-readable data recording medium according to any of claims 9 to 12, wherein
the causing of the at least one mobile display medium to display the one or more advertisements includes causing a plurality of mobile display media to display respective advertisements,
the acquiring of the positional information about the at least one mobile display medium includes receiving the positional information from each of the mobile display media,
the receiving, from the mobile communication terminal, of the photograph image and the positional information includes receiving the photograph image of the advertisement displayed on each of the mobile display media and the positional information about a position where the photograph image of the advertisement was taken, and
the confirming of the visual recognition of the advertisement by the user of the mobile communication terminal includes confirming that all the advertisements displayed on the mobile display media were visually recognized by the user.

14. The non-transitory computer-readable data recording medium according to claim 13, wherein
the causing of the plurality of mobile display media to display respective advertisements includes causing the mobile display media to display respective advertisements different from each other, and
the instructions further cause the computer to cause a mobile display medium displaying an advertisement visually recognized a smaller number of times by the mobile communication terminal to display an advertisement visually recognized a larger number of times by the mobile communication terminal, based on a result of receiving respective photograph images of the advertisements different from each other.

15. The non-transitory computer-readable data recording medium according to claim 13, wherein
the causing of the plurality of mobile display media to display respective advertisements includes causing the mobile display media to display respective advertisements different from each other, and
the instructions further cause the computer to change a display time for which each of the different advertisements is displayed, depending on the number of times the photograph image of each of the different advertisements was visually recognized by the mobile communication terminal.

16. The non-transitory computer-readable data recording medium according to any of claims 9 to 15, wherein
the confirming of the visual recognition of the advertisement by the user of the mobile communication terminal includes confirming that a difference between a time when the photograph image of the advertisement was taken and a time when the photograph image was received falls within a predetermined range.

17. A method for controlling a mobile communication terminal, the method comprising:
photographing an advertisement displayed on a mobile display medium;
acquiring positional information about the mobile communication terminal when the advertisement was photographed;
displaying a photograph image of the advertisement on an account of a social networking service for a user of the mobile communication terminal, by transmitting, to a server configured to manage the account of the social networking service for the user, the photograph image of the advertisement, date-and-time information indicating date and time when the advertisement was photographed, the positional information, and identity information about the user of the mobile communication terminal; and
receiving a notification that a payment is granted for visual recognition of the advertisement, based on confirmation, by the server, that the photograph image of the advertisement was taken by the user, with reference to positional information about the mobile display medium and the positional information about the mobile communication terminal, when the photograph image is displayed on the account.

18. The method according to claim 17, wherein
the photographing of the advertisement includes photographing respective advertisements displayed on a plurality of mobile display media, wherein
the acquiring of the positional information includes acquiring positional information about the mobile communication terminal when each of the advertisements was photographed,
the displaying of the photograph image on the account includes displaying the photograph image on the account, by transmitting, to the server, the photograph image of each of the advertisements, the date-and-time information, the positional information, and the identity information, and
the receiving of the notification includes receiving a notification that a payment is granted for visual recognition of each of the advertisements.
